(19) Europäisches Patentamt

European Patent Office

Office européen des brevets

(11) **EP 0 583 217 B1**

(12) **EUROPEAN PATENT SPECIFICATION**

(45) Date of publication and mention
of the grant of the patent:
**10.05.2000 Bulletin 2000/19**

(51) Int. Cl.[7]: **G06F 15/80**

(21) Application number: **93650028.9**

(22) Date of filing: **29.07.1993**

(54) **Optimisation of feedforward neural networks**

Optimierung eines Neuralnetzwerks mit Vorwärtskopplung

Optimisation d'un réseau neuronal utilisant rétropropagation

(84) Designated Contracting States:
**DE FR GB IE**

(30) Priority: **11.08.1992 IE 257592**

(43) Date of publication of application:
**16.02.1994 Bulletin 1994/07**

(73) Proprietor:
**HITACHI EUROPE LIMITED**
**Maidenhead, Berkshire, SL6 8YA (GB)**

(72) Inventor: **Mitchell, John**
**Ballybrack, County Dublin (IE)**

(74) Representative:
**O'Connor, Donal Henry et al**
**c/o Cruickshank & Co.,**
**1 Holles Street**
**Dublin 2 (IE)**

(56) References cited:
**EP-A- 0 360 674**          **WO-A-91/02315**

- **MICROPROCESSING AND MICROPROGRAMMING, vol.27, no.1/5, August 1989, AMSTERDAM NL pages 189 - 194 NIJHUIS 'Structure and application of NNSIM: a general-purpose neural network simulator'**
- **1991 IEEE INTERNATIONAL JOINT CONFERENCE ON NEURAL NETWORKS, vol.3, 18 November 1991, SINGAPORE pages 2631 - 2638 AZIMI-SADJADI 'A new approach for dynamic node creation in multi-layer neural networks'**
- **1990 IEEE INTERNATIONAL CONFERENCE ON SYSTEMS, MAN, AND CYBERNETICS, 4 November 1990, LOS ANGELES , USA pages 376 - 378 WANG 'Dynamical configuration of neural network architectures'**

**Description**

The invention relates to optimisation of feedforward neural networks.

A neural (or connectionist) network may comprise a structure of interconnected hardware devices, or it may alternatively be implemented in software by which a serial or parallel computer is instructed to carry out neural network processing. Both implementations are generally referred to as neural networks. In general, the motivation behind construction of neural networks has been to emulate biological neural systems for solution of problems. Even on a superficial level, there are several distinctive features about the way in which biological systems process information. For example:

- They use a large number of individual processing units.

- Each processing unit does not store a large quantity of information, and performs a relatively simple computational task. One simple model of such a processing unit simply involves computing a weighted summation of incoming data and outputting this to other units.

- There is a high degree of interconnectivity among the processing units.

Systems with these features are often termed massively parallel.

This invention relates to feedforward networks, which are possibly the most commonly used neural network. Such a network consists of a number of input units, one or more output units, and possibly one or more layers of hidden units (sometimes referred to as inner neurons) between the input and output units. The input units are connected to the hidden units, which in turn are connected to each output unit. Information is passed from layer to layer by means of these links, each of which has a weight value. Adjustment of the connection weights of the network causes it to process information differently. The name "feedforward" derives from the fact that information passes through the connections in one direction only.

To construct a network which performs some useful function, it is necessary to adjust the weights to appropriate values. This process is referred to as supervised "learning" or "training". In one example, training involves repeated transmission of stimuli for presentation of examples from the problem in question and adjusting the connections to reduce the overall error of the network examples. There are various processes by which training may be carried out, including one referred to as stochastic (for example global optimisation), and deterministic (for example backpropagation). Global optimisation is described in the paper Baba, N., "A New Approach for Finding the Global Minimum of Error Function of Neural Networks", Neural Networks, Vol 2, pp 367-374, 1989, and backpropagation is described in Rumelhart, D. and McClelland, J. "Parallel Distributed Processing: Explorations in the Microstructure of Cognition", Vols 1 and 2, M.I.T. press, 1986. In the backpropagation training process of a neural network having many inputs, a single output, and a single hidden layer, examples have been repeatedly presented to the network and the weight values have been adjusted so as to reduce some error measuring the difference between the network output and the desired output. The usual error measure is the mean squared error.

Feedforward neural networks have been used in many applications, both using discrete and continuous data. In the discrete case, they have been applied to many problems such as pattern recognition/classification which may involve, for example the grading of apples from photographic images, texture analysis of paper quality, or automatic recognition of hand-written postal codes. Application areas where continuous valued data is used include time series prediction and nonlinear regression. One of the most useful aspects of neural networks in these applications is the potential of a suitably trained network to generalise, i.e. to achieve good performance on new examples not used in training of the network. For example, in applying neural networks to recognition of hand-written postal code digits, training is performed using handwriting from a small group of people. It would be useful for postcode recognition if the network also performs well on handwriting samples other than those not used in training of the network.

However there are difficulties in applying neural networks to specific applications. These problems can be broadly stated as:

- Structural Difficulties: What is the most suitable network structure for the problem is question? The nature of the problem itself often (but not always) suggests an appropriate number of input and output units to use. However the number of internal or hidden units to use is difficult to determine. Using too few can result in a network not having enough internal structure for the application in question. Using too many reduces the power of the network to generalise.

- Learning Difficulties: Training a neural network is a slow process often requiring thousands of iterations for the error to be reduced to an acceptable level. This is true no matter what process is used to train the network (though some are faster than others).

PCT Patent Specification No. WO 91/02322 (Hughes Aircraft Company) discloses a process for training a neural network which involves presenting a desired output to hidden units (inner neurons) as well as to output neurons. In the specification there is no disclosure of a method of optimising the structure (i.e. the number of hidden units required) either during or after training. Where the structure is not optimised, there is a tendency to start with using considerably more hidden units than is necessary to ensure that there are sufficient to carry out the tasks required. This results in a considerably longer time requirement for training of the network and also in operation of the network on an on-going basis. Similarly, US Patent Specification No. 5,056,037 (NASA) discloses a feedforward neural network and a method of training it. Again, there is no disclosure of a method or process for optimisation of the structure.

The paper "A geometrical interpretation of hidden layer units in feedforward neural networks" by John Mitchell and published in "Network: Computation in Neural Systems" Vol 3 pp 19-25 February 1992 discloses a process for geometrical interpretation of hidden units in a trained feedforward neural network. Such a geometrical interpretation is of limited value in some circumstances because the global effect of hidden units prevents deletion of them after training of the network and thus optimisation of the neural network is difficult to achieve.

Unfortunately, feedforward networks which use linear processing units are severely limited in the tasks that can be performed. An example is the apparently straightforward classification task of the XOR (exclusive or) problem. Given two input logical (i.e. 0 or 1) values, the requirement is that the network output a 1 if exactly one of the input values is 1. It can be shown that a network with linear units, no matter how many and no matter what the layout, cannot perform this task. Hence it is important that networks use nonlinear processing units. Direct and unique solutions for the parameters can not be found. To find solutions successive approximations to gradually improve parameter estimates must be used.

Learning processes or methods to perform this task have the following common features:

(1) The success of the process is gauged by examining an overall static indicator, or set of static indicators, giving information about how the network is performing. The usual, though not exclusive, static indicator used is the mean squared error of the network of the training data. The methods are collectively called supervised learning techniques.

(2) The process involves repetitions, where in each cycle the training data is presented to the network and the parameters are adjusted. This is done until the overall network learning criterion in (1) above is satisfactory.

The actual learning processes themselves may be classified as gradient based or perturbation based. In Gradient-based learning processes, the information to adjust the weight values of the network is determined from the gradient of the error measure with respect to the various parameters.

Perturbation processes use a different approach. They involve making a small change in the parameters of the network, using a random perturbation. Then the resulting network is checked, and if it is better, the parameters of the network are kept. If not, the change is undone and a new one tried. An example of a stochastic perturbation process is the "global optimisation" process.

A further distinction can be made within these learning processes. Either the weights can be adjusted each time a training point is presented to the network (the adjustment being one of the types defined above), or the adjustments can be done after a complete presentation of the training points. The former is termed on-line learning, and the latter termed off-line learning. Not all adjustments can be done in both ways. For example, backgpropagation can be done on-line or off-line, but the BFGS learning method is usually done off-line, since it being faster than backpropagation is only assured in this case.

From the basic classifications of learning processes above, there have been many modifications that have been claimed to improve the performance.

Because of the difficult nature of the parameter estimation problem, most extensions to the learning processes are based on heuristics as to what to do next during learning. These heuristics would be postulated based on, for example, some observations from repeated simulations in the past. One very simple such heuristic is adding a momentum term to backpropagation. In this case as well as the current gradient information, one also adds a certain proportion of the previous gradient. This is based on the simple observation about the shape of the error surface (i.e., a visualisation of the error measure). If the weight update given by the basic propagation process is causing the error measure to decrease, then this can be speeded up by also adding the previous weight update. This simple heuristic has been adopted in some cases, although its usefulness is disputed, as in Fogelman F, "Neural Network Architectures and Algorithms: A Perspective", pp. 605-615, Proceedings of the ICANN-91 Conference, Helsinki, Finland, Elsevier.

In general, therefore, there is a lack of consensus about what are the best learning processes to use. This is because the nature of learning and convergence is highly complex, with little theory about the shape of error surfaces when there are large numbers of parameters. The actual convergence properties of the system are highly dependant on the nature of the problem, with simpler learning tasks (like the XOR problem) having different convergence characteristics.

It is known that each unit can be assigned a unique identification and can then during the training method be dynamically interpreted. This is done by interpretation of the transfer function of each individually identified hidden unit or neuron. It is also known, for example, to interrupt the operation having regard to the dynamic interpretation of the network performance and specifically the dynamic interpretation of the performance of an individual unit which can be used to provide some form of indicator of the performance of that individual neuron or unit or of the network. This then allows the training process to be interrupted. Then it is known to modify the network and then to continue the simulation. In this way it is known, for example, to interrupt the training and change the network and then continue the training process and see whether this improves the performance of the network. This is clearly described in a paper by J. Nijuis et al "A General-purpose neural network simulator", (Microprocessing and Microprogramming, vol. 27, No. 1/5, August 1989, Amsterdam Netherlands - pages 189-194).

A somewhat similar system is described in European Patent Specification No. 0 360 674.

The invention is directed towards providing a method and apparatus to provide for optimising a feedforward neural network and also to improving efficiency of training.

According to the invention, there is provided a training method for a feedforward neural network having hidden units comprising the steps of transmitting input stimuli to the network and adjusting connection weights in response to monitoring the network output signals, for that training method, the steps including dynamically interpreting the network performance during training by interpretation of the transfer function of an individual hidden unit using the immediately connecting weights of that hidden unit; continuously generating a dynamic indicator of that network performance; comparing the dynamic indicator to a desired dynamic indicator of performance; and interrupting the training method when the dynamic indicator falls below the desired dynamic indicator of performance; characterised in that the method comprises the additional steps when training is interrupted of:

generating a static indicator of the hidden units performance by carrying out a static interpretation of the overall network performance with and without the hidden unit; and

altering the network internal structure in response to the static interpretation of the performance of the hidden unit.

In one embodiment, transfer functions of hidden units are analysed during dynamic interpretation, preferably, these are continuous and monotonic transfer functions having asymptotically zero derivatives are interpreted.

In one embodiment of the method and apparatus according to the invention, the dynamic indicator is geometrical and is displayed.

Ideally, both dynamic and static interpretation involve relating operation of a hidden unit to the input data.

In another embodiment, static interpretation is at a macroscopic level, whereby global information relating to network performance is interpreted.

According to another embodiment, the invention provides a training method for a feedforward neural network comprising the further steps of:

storing characteristics of different training method;

selecting an initial training process and carrying out training according to the method;

dynamically monitoring a feature of the training method;

evaluating the monitored feature according to a control condition; and

selecting a different training method for subsequent training stages according to the control condition.

In this latter embodiment, a plurality of control conditions are used for evaluating monitored features, a control condition being specific to a training method, and another control condition being specific to all methods.

According to a further embodiment, the invention provides an apparatus for a training method of a feedforward neural network, the apparatus comprising means for transmitting stimuli to the network and means for adjusting connection weights in response to monitoring the network output signals, means for dynamically interpreting performance of the network during training by interpretation of the transfer function of an individual hidden unit using the immediately connecting weights of that hidden unit; means for continuously generating a dynamic indicator of the network performance; means for comparing the dynamic indicator to a desired dynamic indicator of performance; and means

EP 0 583 217 B1

for interrupting the training method when the dynamic indicator falls below the desired dynamic indicator of performance, characterised in that the apparatus further comprises:

communication means between the dynamic indicator and a static interpreter;

means in the static interpreter for generating a static indicator of the hidden units performance by carrying out a static interpretation of the overall network performance with and without the hidden unit when the training is interrupted; and

means for altering the network structure in response to the static interpretation of the performance of the hidden unit.

According to a still further aspect, the invention provides an apparatus for implementing a training method of a feedforward neural network including:

a plurality of training methods; and

the apparatus further comprises a training controller comprising:

means for storing characteristics of the training methods;

means for initiating training of the network according to a selected training method;

means for dynamically monitoring a training feature;

means for evaluating the monitored feature according to a control condition; and

means for selecting a different training method or for subsequent training stages according to the control condition.

The method and apparatus of the invention will be more clearly understood from the following description of some preferred embodiments thereof, given by way of example only with reference to the accompanying drawings in which:-

Fig. 1 is a diagrammatic view showing a training method of the invention which involves optimising a feedforward neural network structure;

Fig. 2 is a diagram showing a simple feedforward neural network and operation of a hidden unit;

Figs. 3(a) and 3(b) are diagrams showing the interactive and static interpretative steps of the method in more detail;

Fig. 4 is a diagram showing a portion of the internal structure of a feedforward neural network, and in particular a hidden unit for which the inputs are two-dimensional;

Fig. 5 is a diagram showing a typical geometrical primitive generated by dynamic interpretation;

Fig. 6 is a diagram showing an alternative training method of the invention;

Fig. 7 is a set of graphical plots showing how it operates; and

Fig. 8 is a diagram showing the training method of Fig. 6 in more detail.

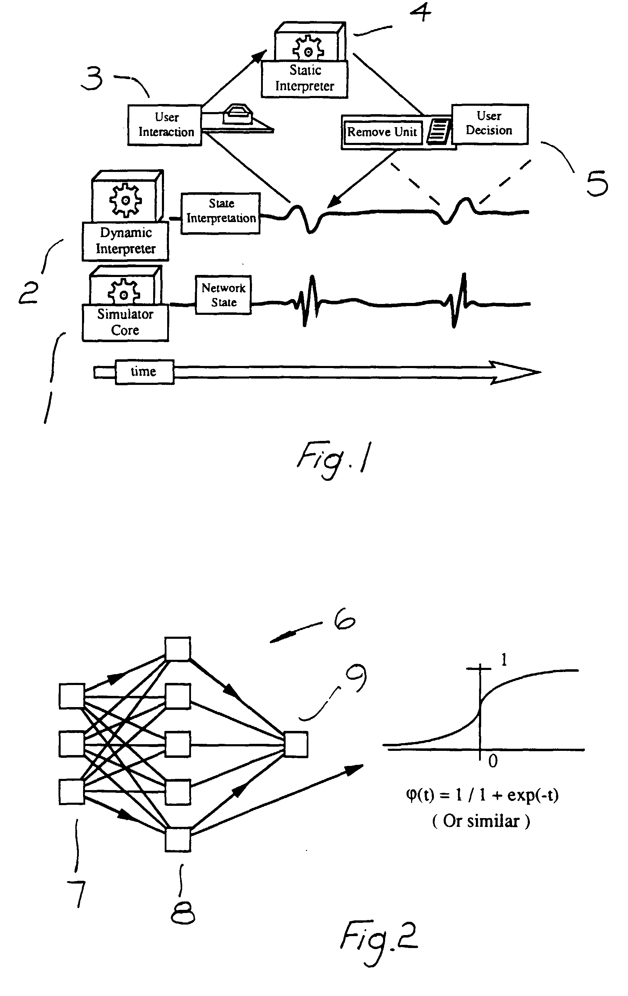

Referring to the drawings, and initially to Fig. 1, there is illustrated a training process or method which involves optimising the structure of a feedforward neural network which has hidden units by determination of the optimum number of hidden units. In more detail, the network has many inputs, a single output and a single layer of hidden units. This could be used for solution of real valued approximation problems such as nonlinear regression applications. The method is indicated by the reference numerals 1 to 5, inclusive. In Fig. 2, a typical feedforward neural network 6 is shown.

There are three input units 7, five hidden units 8, and a single output unit 9.

Before describing the invention the motivation behind it is further clarified by looking at the neural network learning process in more detail. The procedure involved in training a neural network using the backpropagation learning method is as follows. The architecture being considered here is the many input, single output, single hidden layer neural network. This is to be used on real-valued approximation problems.

Having a set of M examples of the (real valued) problem, say

$$(\mathbf{x_1}, y_1), (\mathbf{x_2}, y_2) \ldots, (\mathbf{x_M}, y_M) \qquad (1)$$

For each of these, in training the input to the network is the vector $\mathbf{x}_i$, and the desired output of the network is the scalar $y_i$. This set of examples is repeatedly presented to the network, and the connecting weight values adjusted so as to reduce some error measure measuring the difference between the network output on an example (say N) and the desired output of the network $y_i$. The usual error measure used in this case is the mean square error:

$$MSE = \sum_{i=1}^{M} (y_i - N(\mathbf{x}_i, \theta))^2 \qquad (2)$$

Here the output of the network N depends on the input vector $\mathbf{x}_i$ and the adjustable parameters of the network $\theta$. The values of these parameters are adjusted by training the network using some form of iterative process. In most simulation environments this information is the sole guide used in training. Hence the decision that training is complete is taken on the basis of the value of the MSE. Clearly this variable is a macroscopic performance measure which does not directly take into account the internal structure of the network. There are several reasons why more detailed information is not used. For example:

(a) It is not clear what information should be monitored. The relationship between individual connection values and the overall performance of the network, for example, is not clear.

(b) The computational power requirement for obtaining useful information is prohibitive.

Hence information which would be useful in creating a better network structure during training is difficult to obtain and interpret.

In the invention, useful geometrical information is generated during the simulation process. This requires little processing power as it can be obtained in an efficient way by using the connection strengths of the network.

Referring to Fig. 1, the apparatus of the invention comprises the following components:-

- A neural network simulator core or processor 15 - this is a multilayer feedforward neural network simulator. Within this component are the necessary circuits to implement a multilayer feedforward neural network, and methods to be used to train the network.

- A dynamic interpreter 16 - this portion of the apparatus interprets the internal state of the network during the simulation. This is done using geometrical means, i.e. using the geometrical shape features of the hidden units.

- A static interpreter 17. Acting on information from the geometrical interpreter, it is possible to investigate the internal structure of the network in more detail by interrupting the training process.

In step 1 of the method, training of the neural network is carried out by the neural network processor 15. Training may be carried out by any suitable iterative process, such as backpropagation.

In step 2 of the method, dynamic interpretation of the structure of the neural network is carried out during training. Briefly, dynamic interpretation of the network at the microscopic level is carried out. This involves interpretation of the transfer function of a hidden unit using only the immediately connecting weights of that hidden unit. Thus, the processing requirements for such dynamic interpretation are relatively small. Step 2 also involves displaying performance indicators generated during dynamic interpretation. Dynamic interpretation is described in more detail below.

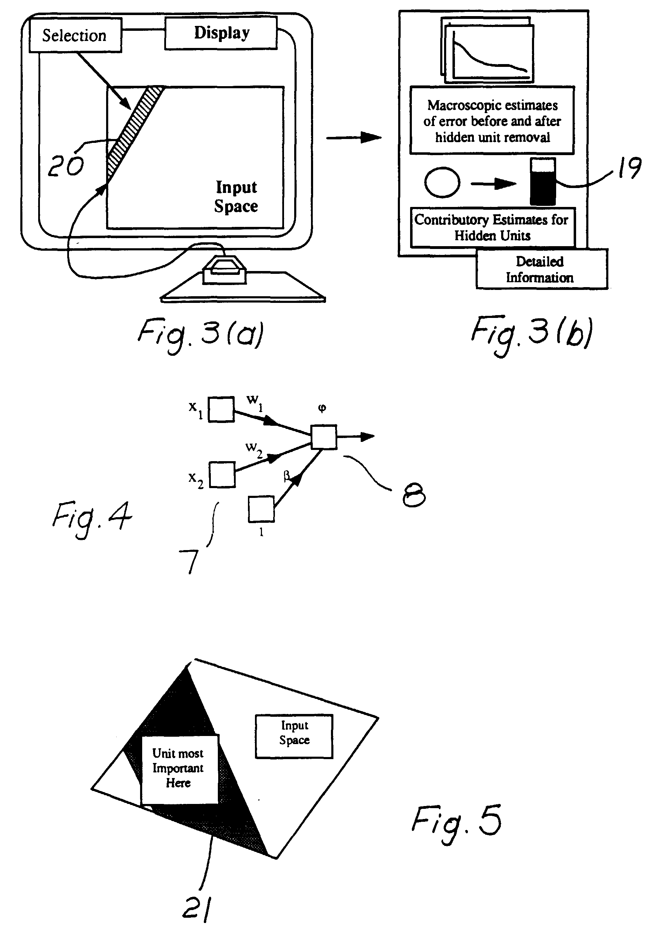

In step 3 of the method, user interaction takes place by analysis of the displayed indicators. In this embodiment, the indicators are geometrical and a sample is shown in Fig. 3(a). A user input device such as a keyboard or "mouse" is used for selection of a particular display, and activation of the static interpreter 17. The static interpreter 17 communicates with the dynamic interpreter 16 and with the neural network processor 15 to interrupt training of the network and carry out a detailed analysis of the resultant static neural network at a macroscopic level.

Step 4 involves display of indicators representing the structure of the neural network in considerably more detail than that generated by the dynamic interpreter 16. Such a display is shown in Fig. 3(b). In this example, the maximum error of the network is shown before and after the removal of a hidden unit, with a symbol 19 indicating the relevance. Thus, a user may see at a glance the relevance of a particular hidden unit both in detail, and by a simple indicator.

In step 5, a decision is made as to whether or not the particular unit is to be removed from the network. If so, the neural network processor removes the unit, training resumes, and steps 1 to 5 are repeated. Such a decision may alternatively be automatically made by the processor 15 without the need for static interpretation, if the geometrical indicator from dynamic interpretation is clear enough.

In step 2 interpretation of a hidden unit does not require information relating to other hidden units of the network. In practice, this information generally comprises weights connected directly to the hidden unit and boundaries of the data. Accordingly, there is a relatively small processing requirement of the dynamic interpreter and training of a network is not slowed down to any great extent.

A feedforward network with a single hidden layer of units and a single output unit performs the following type of transformation from input to output:

$$N(\mathbf{x}) = \psi(\sum_{i=1}^{N} v_i \varphi_i (\sum_{j=1}^{K} w_{ij} x_j + \beta_i) + \tau) \qquad (3)$$

Where there are K input units, connected with weights $W_{ij}$ to N hidden units, which in turn are connected with weights $V_i$ to the single output unit. The structure also contains bias terms $\beta_i$ and $\tau$, which can be interpreted as weight values to the hidden or output unit from a processing unit which always outputs 1. They are intended to give the structure more flexibility in training. The power of this structure comes from the fact that the units within it process information in a non-linear fashion. Hence each of the hidden units has a transfer function $\varphi_i$, and the output unit has a transfer function $\psi$. These transfer functions are usually chosen to be identical and the most common is the sigmoidal transfer function:

$$\varphi(x) = \frac{1}{1 + \exp(-x)} \qquad (4)$$

which is monotonically increasing and has range between 0 and 1. This was originally proposed from biological considerations.

The output unit is assumed to have a linear or a piecewise linear transfer function. However, because the object is to assess the relative contribution of the hidden units to the approximation, the process also involves use of nonlinear transfer functions provided they are continuous and monotonic, (such as the sigmoid function).

Dynamic interpretation is now described in detail for the case where the network input is two-dimensional.

In the case where the input to the network is two-dimensional, projection methods can be used to relate the role of the hidden unit to the input space. Suppose the derivative of the transfer function is asymptotically zero. This restriction is not a severe one, and most of the transfer functions proposed for feedforward networks satisfy it. In fact since gradient descent methods use the derivative of the transfer function in calculating the change to the weights, it is necessary for this condition to hold for the teaching method not to be unstable. The transfer function is then projected onto a subset of the input space, which is termed a geometrical primitive of the hidden unit. The following example shows how this is done in the case of the sigmoidal transfer function.

The output of a hidden unit H is given by

$$\varphi(x_1, x_2) = \varphi(w_1 x_1 + w_2 x_2 + \beta) \qquad (5)$$

where the input to the network is $X = (x_1, x_2)$.

Fig. 4 shows an example of such a hidden unit 8. The additional term $\beta$, the bias term, may be considered as an extra input to the network with a constant value 1. However, it is not essential that this bias term be present.

The object of dynamic interpretation is to capture the area of the input space for which the hidden unit is most important (see area 20 of Fig. 3(a)). Intuitively, this is where the rate of change of the transfer function is greatest. If the rate of change of the transfer function is very small, the hidden unit is just adding a constant term to the network rather than doing any important processing. The projections of the hidden units described here use this property.

The contribution of the hidden unit to the output unit is given by $v\varphi(\mathbf{X})$ where v is the connection weight to the output unit. Since the derivative of the transfer function is asymptotically zero, given a small positive value $\varepsilon$, a region can be found for which

$$v\varphi'(\mathbf{x}) < \varepsilon \qquad\qquad (6)$$

or equivalently, for a small positive value $\alpha$, a region can be found such that

$$v(\varphi(\mathbf{x}) - a) < \alpha \qquad\qquad (7)$$

or

$$v(b - \varphi(\mathbf{x})) < \alpha \qquad\qquad (8)$$

where the range of the transfer function is [$a,b$].

Such a region is in fact bounded by two lines (see Fig. 5), which can be found quite simply algebraically. The following example uses the standard sigmoid function.

Consider a hidden unit with transfer function given by (5). This has range [0,1]. Let $t = w_1 x_1 + w_2 x_2 + \beta$. The n from (7) and (8) it is straightforward to show that (7) holds when:-

$$t < \log\left(\frac{\alpha}{v\text{-}\alpha}\right) \qquad\qquad (9)$$

and (8) holds when:-

$$t > \log\left(\frac{v\text{-}\alpha}{\alpha}\right) \qquad\qquad (10)$$

Hence the hidden unit is most important in the region

$$\log\left(\frac{\alpha}{v\text{-}\alpha}\right) < t < \log\left(\frac{v\text{-}\alpha}{\alpha}\right) \qquad\qquad (11)$$

This region is bounded by two lines in the input space, given by (9) and (10) with the inequalities replaced by equalities. This type of indicator of the hidden units is referred to as a "geometrical primitive" of the hidden unit. This projection can be used to give a rough idea of where the hidden unit is most important during the simulation. Altering the value of a adjusts the sensitivity of the method to detect the region over which the unit is operating. For example, to make sure that the region where units deviate from being constant by no more than 5%, $\alpha$ is chosen to be 0.05. Fig. 5 shows an example 21 of this geometrical primitive.

An important point is that the primitive can be determined using only information about the current state of the unit and its connecting weights. Hence it can be determined efficiently. These projection lines can then be displayed on screen as part of the geometrical interpretation process.

Dynamic interpretation for the general case is now described in detail.

For a hidden unit, the contribution to the output unit is of the form.

$$v\varphi\left(\sum_{i=1}^{K} w_i x_i\right) \qquad\qquad (12)$$

where there may also be a bias term included as input to the unit.

The set of examples which are being used to train the network come from a region of the input space. The boundaries of this region are determined before training commences. The boundaries form a rectangular region. For K inputs there are $2^K$ vertices to the region. Suppose the region is

$$R=[a_1,b_1]\times[a_2,b_2]\times...\times[a_K,b_K] \tag{13}$$

To obtain an estimate of how important the hidden unit is, the following steps are carried out.

A. The boundary points of the region are searched for the maximum and minimum of the hidden unit over them. This can be done very quickly if the transfer function is monotonic. The procedure to get the maximum is this:

A1. Let

$$\tilde{\mathbf{x}} = (\tilde{x}_1, \tilde{x}_2,...,\tilde{x}_K)$$

be the desired vertex. Now let

$$x_{1,1} = (a_1, a_2,...,a_K) \tag{14}$$

and

$$x_{2,1} = (b_1, a_2,...,a_K) \tag{15}$$

Compare $\varphi(\mathbf{X}_{1,1})$ and $\varphi(\mathbf{X}_{2,1})$. If the former is less that the latter then $\tilde{x}_1$, the first co-ordinate of $\tilde{\mathbf{x}}$, is $x_{1,1}$. Otherwise it is $x_{2,1}$.

A2. Having found the first co-ordinate of the desired vertex, then let

$$\mathbf{x}_{1,2} = (\tilde{x}_1,a_2,...,a_K) \tag{16}$$

**and**

$$\mathbf{x}_{2,2} = (\tilde{x}_1,b_2,...,a_K) \tag{17}$$

as in the first stage, compare $\varphi(\mathbf{x}_{1,2})$ and $\varphi(\mathbf{x}_{2,2})$, and assign $a_2$ or $b_2$ to $\tilde{x}_2$ as appropriate.

A3. Repeat this procedure until $\tilde{\mathbf{x}}$ has been fully determined.

A4. An analogous procedure can be used to determine the boundary point of the region for which the value of the transfer function is a minimum.

B. In step A the maximum and minimum of the transfer functions over the region of the input space of interest were calculated, $x_{max}$ and $x_{min}$ say. These values used in conjunction with the range of the transfer function give an estimate of the importance of the hidden unit.

B1. Suppose the transfer function has range $[a,b]$. Compute:

$$b\text{-}x_{max} \tag{18}$$

and

$$x_{min}\text{-} a \tag{19}$$

The aim here is to estimate the maximum change in state of the network if the hidden unit is removed. To minimise this change in state an appropriate constant may be added to the bias term of the output unit. Intuitively, if the transfer function has a practically constant value over the region of interest (c, say) it makes sense to remove the hidden unit and add c to the bias term of the output unit.

B2. The next step is to find the bigger of the quantities in (18) and (19). If it is (18), if replacing the hidden unit, add b to the bias term of the output unit.

$$\text{Let:} \qquad C = b - x_{min} \qquad\qquad (20)$$

$C$ is termed the "contributory estimate" of the unit to the approximation.

B3. If (19) is the bigger, the unit should be replaced by adding a to the bias term of the output unit. The contributory estimate in this case is:

$$C = x_{max} - a \qquad\qquad (21)$$

B4. The contributory estimate of the hidden unit is now related to the estimate of change in state of the network by removing that unit. The total contribution of a hidden layer of N units to the output of the network is an expression of the form:

$$g_N(\mathbf{x}) = \sum_{i=1}^{N} v_i \varphi_i(\mathbf{x}) + \tau \qquad\qquad (22)$$

Where $\tau$ is the bias term of the output unit. Without loss of generality, by re-labelling if necessary, it can be assumed that the Nth hidden unit is the one to be removed. If this unit is removed according to the above procedure, the new contribution is

$$g_{N-1}(\mathbf{x}) = \sum_{i=1}^{N-1} v_i \varphi_i(\mathbf{x}) + \kappa + \tau \qquad\qquad (23)$$

where K is $a$ or $b$ depending on whether step B3 or B4 were followed. Note that:

$$g_N(\mathbf{x}) - g_{N-1}(\mathbf{x}) < C \qquad\qquad (24)$$

where $C$ is the contributory estimate of the Nth hidden unit. In addition, respective network, $f_N(x)$ and $f_{N-1}(x)$ are related by:

$$f_N(\mathbf{x}) - f_{N-1}(\mathbf{x}) < \lambda C \qquad\qquad (25)$$

where $\lambda$ is the maximum value of the derivative of the transfer function of the output unit. This relates to the contributory estimate of the hidden unit explicitly to an upper bound for the change in state induced by the removal of that unit.
An important point is that for a problem with an N dimensional input space only 2N evaluations of the hidden unit transfer function are needed to find the maximum and minimum of the transfer function over the region of interest, despite the region having $2^N$ end points. This is because the transfer function is monotonic and therefore not all the end points of the region defined by (13) need be evaluated. This means that the information may be generated with little processing. Accordingly, this information can be calculated during the simulation process and displayed as an aid to deciding when to remove hidden units.

Operation of the static interpreter 17 is now described in detail.

The step 4 of static interpretation provides more detailed information about the network. For example, the mean squared error of the network before and after the removal of a unit may be determined. Hence:

$$MSE = \sum_{i=1}^{M} (y_i - f_i)^2 \qquad (26)$$

is calculated by presenting the M training examples, where $y_i$ is the required value and $f_i$ is the network output. Note that the generalisation error can be investigated by calculating (26) for examples outside the training set but within the scope of the required problem.

The maximum norm error of the network:

$$MAX = \max_{1 \leq i \leq M} |y_i - f_i| \qquad (27)$$

gives the absolute value of the maximum error over all the training points. Again the use of such an error measure is not limited to the training set.

These variables are related to the macroscopic performance of the network. In other words, they give information about the behaviour of the network by observing external characteristics of it. This information may be used to delete a hidden unit, either automatically according to the static interpreter output, or in response to a user decision, as illustrated.

The combination of dynamic interpretation followed by analysis and static interpretation and possible removal of hidden units on an on-going basis whereby training is interrupted only when more detail is required of certain hidden units and decisions are to be made regarding deletion of the unit or alteration of the structure generally is very important. An important feature is that after training of the network an optimised internal structure of the network is achieved without the need to carry out further geometrical interpretation or analysis of the network. The only disadvantage is that training of the network takes slightly longer than would heretofore be the case. Because the structure of the network is optimised, efficiency of the network in use for the desired application is significantly improved.

It is not essential that indicators arising from dynamic, or static, interpretation are displayed. For example, they may be simply stored and subsequently accessed by the processor for use in making an automatic decision as to whether or not the hidden unit should be deleted.

Another aspect of the invention is a manner in which the training or learning process may be improved, and indeed optimised. This aspect of the invention may be carried out alone, or in combination with the structure optimisation steps.

Heretofore, the learning method has been improved by observing the characteristics of the learning method following which an improved method A is derived, using heuristics incorporating observations about the old learning method.

In the invention improved learning is achieved by controlling different learning methods within the system.

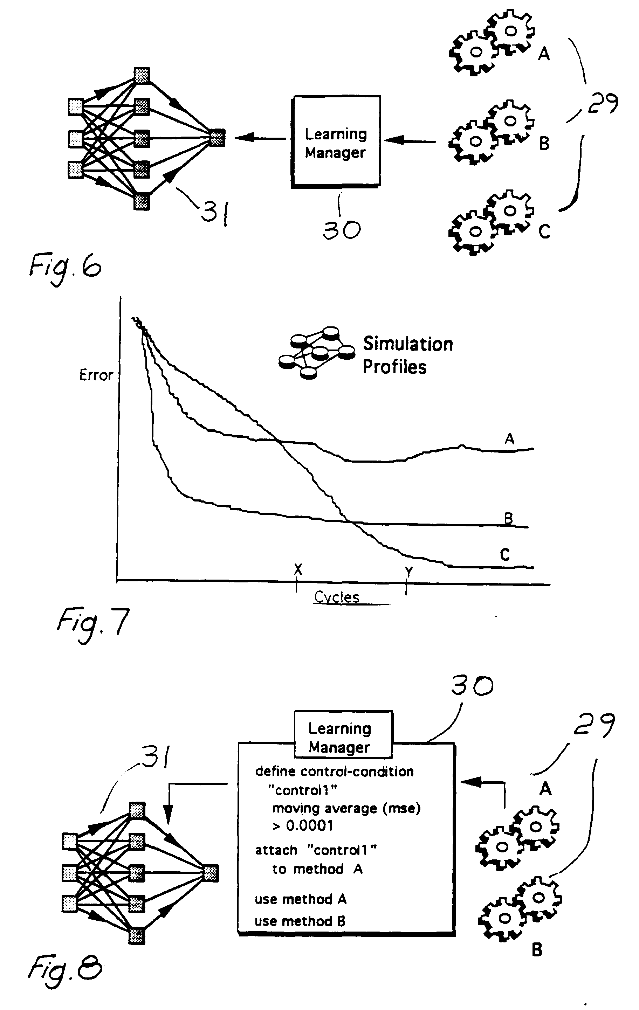

A high-level view of the system is shown in Fig. 6. It is described as follows. The system (which may be the processor 15) comprises a set or library of learning processors 29 for finding the weight values of the network. Several such processors are described above. Examples are those operating according to the backpropagation and the global optimisation methods. One of these methods will be used to adjust the parameters of the network at any individual instant during learning. The system also comprises a learning manager component 30 which can dynamically alter which of the processors is used to update the parameters of the network 31. This alteration is generated by control conditions or rules within the manager 30 which guide the alteration. The rules within the learning manager can be few or many, depending on the level of sophistication desired from the manager component 30. The rules within the manager can also be generic (incorporating information about general features of the learning method) or specific (pertaining to the performance of an algorithm on a specific problem or class of problem.

The rules may be acquired in various ways. Firstly, previous simulations using a single learning method may suggest overall features of that method. This will be discussed in more detail in the following example. Secondly, a method may have some computational or storage requirements that are known or can be estimated. This information can be used to specify constraints for that method on the network structure on which it can be used. A simple learning manager rule of this type forbids a method to be used if the number of weights of the network is over a certain fixed value.

Hence the role of the manager 30 is to select the processor that is most appropriate during learning, in some specific sense as defined by the learning manager rules, and hence to improve learning.

A specific embodiment is now described which addresses how these rules are arrived at, how they are used by the learning manager 30 to control the simulation, and the manager itself.

During the use of the existing processors in the traditional manner of applying one process repeatedly until a convergence criterion is reached, useful information for the application of our more general method may be gathered by observing distinctive characteristics of the individual learning methods. Figure 7 shows an example. Suppose the graphs of Figure 7 represent the average performance of three learning processors on a particular problem. By observing the features of the simulations, we can make the following statements

Process A "fails to converge".

Process B "displays good initial convergence, but poor final convergence". In other words, A performs well at the beginning of the simulation, but does not work well once this initial period of the simulation is over.

Process C "is worse than B in the beginning of the simulation, but performs better during the final stages".

With this simple set of observations, the issue arises as to how to translate them into a form which can be used to control the learning. We describe this translation, with a couple of simple examples below.

Observations about the features of a given learning process are translated into a control condition. The general form of a control condition is that it is some logical function of a statistic or measure of an attribute of the network which is used to monitor the learning method. Hence the general form of control condition can be expressed as:

$$F(S_1, S_2 ... S_k) \in \{0,1\}, S_i = S_i(N(w)) \tag{28}$$

where $S_i$ is some indicator that depends on the output of the network N with weights w. Such indicators include the mean squared error of the network, the number of units within the network, and the number of iterations of a learning method on the network. The value of the indicator is not limited to the current value, but may be also a function of stored previous values.

The following are some examples of the translation of feature observations to control conditions:

(1) the *method is not converging*. Hence the method should no longer be used if the mean squared error stops decreasing. A control condition for this is:

$$E(t) - E(t - 1) > \alpha \tag{29}$$

where $\alpha$ is a constant representing the minimum acceptable change in the error change E(t) - E(t-1) brought about the algorithm at time t. Hence $\alpha$ represents a value "close to 0", the exact value being decided by the experimenter. Therefore the algorithm which is used under this control condition will no longer be used when this condition evaluates to FALSE.

A more sophisticated version of the control condition uses a moving average of the error measure to make the condition less sensitive to small fluctuations in the performance of the learning method and more useful in detecting the overall trend. For example, a 10-cycle moving average would use:

$$\frac{E(t) - E(t-10)}{10} > \alpha \tag{30}$$

which checks if the average change in the Error measure is "close to 0". If it is, there should be a switch to another learning method.

(2) *The learning method should not be used if the network is large:* This condition may be necessary for certain learning methods because of storage requirements that are excessive if the network becomes large, or because the computation scales badly as a function of network size. Second order learning methods (such as the BFGS method) are an example of both of these features. If W is the number of weights within the network, then the Hessian matrix of second order derivatives is of size $W^2$, and the number of computational steps needed to calculate is also of order $o(W^2)$. Control conditions for this situation are clearly given by bounds on the number of weights or units within the network. This is seen to be a control condition since the number of units or weights within a network can be viewed as a statistic or attribute of the network.

The following is an example of the method. In this example the learning manager controls the use of two learning methods, method A being a first order gradient descent method (e.g., backpropagation) and method B being based on second order gradients (e.g. the BFGS method). Method A uses a step-size parameter. For reasons mentioned above, optimal choice of this parameter is difficult. Here we assume that a reasonable choice of parameter is used, which gives acceptable but not optimal performance.

Based on observation, the following features have been observed about the processes:

(1) Method A requires less processing power during the initial stages of the simulation and thus is preferred.

(2) Method B has better convergence in the later periods of learning, where the extra computational requirement is justified.

Part (1) can be easily translated into a high-level control conditions for the learning manager, namely, "initially, use A".

Part (2) translates as "after using A, use B".

A control condition to determine when to switch processes is based on the dynamics of the learning. Such control conditions are used to detect situations when features associated with a given learning method hold. In this embodiment the feature is that process A is no longer converging. This is achieved using the moving average detector of the equation (30).

Figure 8 shows the complete example. The example shows the rules as they might appear within a system as a set of commands. Firstly, the moving average control condition is defined. Then, the control condition is attached to method A. When method A runs, this control condition will act as a monitor to decide when it should be stopped. The final two lines apply method A and then B. The method of transfer from A to B is determined by the control condition. There are other control conditions which may be used. For example, the condition "stop the simulation when the mean squared error is small" could be used to both processes A and B. Therefore the simulation will be stopped when this becomes true. Note that this may mean that learning method B is not used, if A is sufficient. The important point is that a control condition is used in deciding what to do next. This may be to switch learning processes, or to end learning.

**Claims**

1. A training method for a feedforward neural network (6) having hidden units (8) comprising the steps of transmitting input stimuli to the network and adjusting connection weights in response to monitoring the network output signals for that training method, the steps including dynamically interpreting (2) the network performance during training by interpretation of the transfer function of an individual hidden unit (8) using the immediately connecting weights of that hidden unit (8); continuously generating a dynamic indicator (20) of that network performance; comparing the dynamic indicator (2) to a desired dynamic indicator of performance; and interrupting the training method when the dynamic indicator (20) falls below the desired dynamic indicator of performance; characterised in that the method comprises the additional steps when training is interrupted of:

   generating a static indicator of the hidden units (8) performance by carrying out a static interpretation of the overall network performance with and without the hidden unit; and

   altering the network internal structure in response to the static interpretation of the performance of the hidden unit.

2. A training method as claimed in claim 1, wherein continuous and monotonic transfer functions having asymptotically zero derivatives are interpreted.

3. A training method as claimed in any preceding claim wherein the dynamic indicator (20) is geometrical and is displayed.

4. A training method as claimed in any preceding claim, wherein both dynamic and static interpretation involve relating operation of a hidden unit to the input data.

5. A training method as claimed in any preceding claim wherein global information relating to network performance is interpreted during static interpretation (4).

6. A training method as claimed in any preceding claim comprising the further steps of:

storing characteristics of different training methods (29):

selecting an initial training method (29) and carrying out training according to the method (29);

dynamically monitoring a feature of the training method (29);

evaluating the monitored feature according to a control condition; and

selecting a different training method (29) for subsequent training stages according to the control condition.

7. A training method as claimed in claim 6, wherein a plurality of control conditions are used for evaluating monitored features, a control condition being specific to a training method, and another control condition being specific to all methods.

8. An apparatus for a training method of a feedforward neural network (6) having hidden units (8), the apparatus comprises means (15) for transmitting stimuli to the network (6); means (15) for adjusting connection weights in response to monitoring the network output signals, means (16) for dynamically interpreting performance of the network (6) during training by interpretation of the transfer function of an individual hidden unit (8) using the immediately connecting weights of that hidden unit (8); means for continuously generating a dynamic indicator (20) of the network performance; means for comparing the dynamic indicator (20) to a desired dynamic indicator of performance; and means for interrupting the training method when the dynamic indicator (20) falls below the desired dynamic indicator of performance, characterised in that the apparatus further comprises:

communications means between the dynamic indicator (20) and a static interpreter (17);

means in the static interpreter (17) for generating a static indicator of the hidden units (8) performance by carrying out a static interpretation of the overall network performance with and without the hidden unit when the training is interrupted; and

means for altering the network structure in response to the static interpretation of the performance of the hidden unit.

9. An apparatus for implementing a training method as claimed in claim 8, including:

a plurality of training methods (29); and

the apparatus further comprises a training controller (30) comprising:

means for storing characteristics of the training methods;

means for initiating training of the network

according to a selected training method;

means for dynamically monitoring a training feature;

means for evaluating the monitored feature according to a control condition; and

means for selecting a different training method or for subsequent training stages according to the control condition.

**Patentansprüche**

1. Trainingsverfahren für ein neuronales Vorwärtsnetzwerk (6) mit versteckten Einheiten (8), umfassend die folgenden Schritte: Übertragen von Eingangsstimuli zu dem Netzwerk und Justieren von Verbindungsgewichtungen als Reaktion auf die Überwachung der Netzwerkausgangssignale für dieses Trainingsverfahren, wobei die Schritte folgendes beinhalten: dynamisches Interpretieren (2) der Netzwerkleistung während des Trainings durch Interpretation der Transferfunktion einer individuellen versteckten Einheit (8) anhand der sofort verbindenden Gewichtungen dieser versteckten Einheit (8); kontinuierliches Erzeugen eines dynamischen Indikators (20) dieser Netzwerkleistung; Vergleichen des dynamischen Indikators (2) mit einem gewünschten dynamischen Leistungsindikator; und Unterbrechen des Trainingsverfahrens, wenn der dynamische Indikator (20) unter den gewünschten dynamischen Leistungsindikator fällt; dadurch gekennzeichnet, daß das Verfahren bei Unterbrechung des Trainings die folgenden zusätzlichen Schritte umfaßt:

Erzeugen eines statischen Indikators der versteckten Leistungseinheiten (8) durch Durchführen einer statischen Interpretation der gesamten Netzwerkleistung mit der und ohne die versteckte(n) Einheit; und
Ändern der internen Netzwerkstruktur als Reaktion auf die statische Interpretation der Leistung der versteckten Einheit.

2. Trainingsverfahren nach Anspruch 1, bei dem kontinuierliche und monotone Transferfunktionen mit asymptotischen Nullableitungen interpretiert werden.

3. Trainingsverfahren nach einem der vorherigen Ansprüche, bei dem der dynamische Indikator (20) geometrisch ist und angezeigt wird.

4. Trainingsverfahren nach einem der vorherigen Ansprüche, bei dem die dynamische und die statische Interpretation einen Vergleichsvorgang zwischen einer versteckten Einheit und den Eingangsdaten beinhaltet.

5. Trainingsverfahren nach einem der vorherigen Ansprüche, bei dem globale Informationen über die Netzwerkleistung während der statischen Interpretation (4) interpretiert werden.

6. Trainingsverfahren nach einem der vorherigen Ansprüche, ferner umfassend die folgenden Schritte:

Speichern der Charakteristiken unterschiedlicher Trainingsverfahren (29);
Wählen eines ersten Trainingsverfahrens (29) und Durchführen des Trainings gemäß dem Verfahren (29);
dynamisches Überwachen eines Merkmals des Trainingsverfahrens (29);
Beurteilen des überwachten Merkmals gemäß einem Steuerzustand; und Wählen eines anderen Trainingsverfahrens (29) für nachfolgende Trainingsphasen gemäß dem Steuerzustand.

7. Trainingsverfahren nach Anspruch 6, bei dem eine Mehrzahl von Steuerzuständen zum Beurteilen überwachter Merkmale verwendet wird, wobei ein Steuerzustand spezifisch für ein Trainingsverfahren und ein anderer Steuerzustand spezifisch für alle anderen Verfahren ist.

8. Vorrichtung für ein Trainingsverfahren eines neuronalen Vorwärtsnetzwerkes (6) mit versteckten Einheiten (8), wobei die Vorrichtung folgendes umfaßt: ein Mittel (15) zum Übertragen von Stimuli zu dem Netzwerk (6); ein Mittel (15) zum Justieren von Verbindungsgewichtungen als Reaktion auf die Überwachung der Netzwerkausgangssignale; ein Mittel (16) zum dynamischen Interpretieren der Leistung des Netzwerkes (6) während des Trainings durch Interpretation der Transferfunktion einer individuellen versteckten Einheit (8) anhand der sofort verbindenden Gewichtungen dieser versteckten Einheit (8); ein Mittel zum kontinuierlichen Erzeugen eines dynamischen Indikators (20) der Netzwerkleistung; ein Mittel zum Vergleichen des dynamischen Indikators (20) mit einem gewünschten dynamischen Leistungsindikator; und ein Mittel zum Unterbrechen des Trainingsverfahrens, wenn der dynamische Indikator (20) unter den gewünschten dynamischen Leistungsindikator fällt, dadurch gekennzeichnet, daß die Vorrichtung ferner folgendes umfaßt:

ein Kommunikationsmittel zwischen dem dynamischen Indikator (20) und einem statischen Interpretierer (17);
ein Mittel in dem statischen Interpretierer (17) zum Erzeugen eines statischen Indikators der Leistung der versteckten Einheften (8) durch Durchführen einer statischen Interpretation der gesamten Netzwerkleistung mit der und ohne die versteckte(n) Einheit, wenn das Training unterbrochen wird; und
ein Mittel zum Ändern der Netzwerkstruktur als Reaktion auf die statische Interpretation der Leistung der versteckten Einheit.

9. Vorrichtung zum Ausführen eines Trainingsverfahrens nach Anspruch 8, umfassend:

eine Mehrzahl von Trainingsverfahren (29); und
wobei die Vorrichtung ferner einen Trainings-Controller (30) umfaßt, der folgendes aufweist:
ein Mittel zum Speichern von Charakteristiken der Trainingsverfahren;

ein Mittel zum Einleiten von Training des Netzwerkes gemäß einem gewählten Trainingsverfahren;

ein Mittel zum dynamischen Überwachen eines Trainingsmerkmals;

ein Mittel zum Beurteilen des überwachten Merkmals gemäß einem Steuerzustand; und

ein Mittel zum Wählen eines anderen Trainingsverfahrens oder für nachfolgende Trainingsphasen gemäß dem Steuerzustand.

## Revendications

1. Méthode d'apprentissage pour un réseau neuronal à réaction anticipative (6) ayant des unités cachées (8) comprenant les étapes consistant à transmettre des excitations d'entrée au réseau et à ajuster des pondérations de connexion en réponse au contrôle des signaux de sortie du réseau pour cette méthode d'apprentissage, les étapes incluant interpréter dynamiquement (2) la performance du réseau durant l'apprentissage par l'interprétation de la fonction de transfert d'une unité cachée individuelle (8) en utilisant les pondérations de connexion immédiate de cette unité cachée (8); générer continuellement un indicateur dynamique (20) de la performance de ce réseau; comparer l'indicateur dynamique (2) avec un indicateur dynamique désiré de performance; et interrompre la méthode d'apprentissage lorsque l'indicateur dynamique (20) tombe en dessous de l'indicateur dynamique désiré de performance; caractérisée en ce que, lorsque l'apprentissage est interrompu, la méthode comprend les étapes supplémentaires consistant à:

   générer un indicateur statique de la performance de l'unité cachée (8) en réalisant une interprétation statique de la performance globale du réseau avec et sans l'unité cachée; et
   altérer la structure interne du réseau en réponse à l'interprétation statique de la performance de l'unité cachée.

2. Méthode d'apprentissage telle que revendiquée dans la revendication 1, dans laquelle les fonctions de transfert continues et monotones ayant des dérivées asymptotiquement de zéro, sont interprétées.

3. Méthode d'apprentissage telle que revendiquée dans l'une quelconque des revendications précédentes, dans laquelle l'indicateur dynamique (20) est géométrique et est affiché.

4. Méthode d'apprentissage telle que revendiquée dans l'une quelconque des revendications précédentes, dans laquelle les interprétations dynamique et statique comprennent la mise en relation de l'opération d'une unité cachée avec les données d'entrée.

5. Méthode d'apprentissage telle que revendiquée dans l'une quelconque des revendications précédentes, dans laquelle les informations globales se rapportant à la performance du réseau sont interprétées durant l'interprétation statique (4).

6. Méthode d'apprentissage telle que revendiquée dans l'une quelconque des revendications précédentes, comprenant les étapes ultérieures consistant à:

   mémoriser les caractéristiques de différentes méthodes d'apprentissage (29);
   sélectionner une méthode d'apprentissage initiale (29) et exécuter l'apprentissage selon la méthode (29);
   contrôler dynamiquement une caractéristique de la méthode d'apprentissage (29);
   évaluer la caractéristique contrôlée selon une condition de contrôle; et
   sélectionner une méthode d'apprentissage différente (29) pour des étapes d'apprentissage subséquentes selon la condition de contrôle.

7. Méthode d'apprentissage telle que revendiquée dans la revendication 6, dans laquelle une pluralité de conditions de contrôle sont utilisées pour évaluer des caractéristiques contrôlées, une condition de contrôle étant spécifique à une méthode d'apprentissage, et une autre condition de contrôle étant spécifique à toutes les méthodes.

8. Appareil pour une méthode d'apprentissage d'un réseau neuronal à réaction anticipative (6) ayant des unités cachées (8), l'appareil comprend un moyen (15) pour transmettre des excitations au réseau (6); un moyen (15) pour ajuster des pondérations de connexion en réponse au contrôle des signaux de sortie du réseau, un moyen (16) pour interpréter dynamiquement la performance du réseau (6) pendant l'apprentissage par interprétation de la fonction de transfert d'une unité cachée individuelle (8) en utilisant les pondérations de connexion immédiate de cette unité cachée (8); un moyen pour générer continuellement un indicateur dynamique (20) de la performance du réseau; un moyen pour comparer l'indicateur dynamique (20) avec un indicateur dynamique désiré de performance; et un moyen pour interrompre la méthode d'apprentissage lorsque l'indicateur dynamique (20) tombe en dessous de l'indicateur dynamique désiré de performance, caractérisé en ce que l'appareil comprend en outre:

un moyen de communication entre l'indicateur dynamique (20) et un interpréteur statique (17);

un moyen dans l'interpréteur statique (17) pour générer un indicateur statique de la performance de l'unité cachée (8) par la mise en oeuvre d'une interprétation statique de la performance globale du réseau, avec et sans l'unité cachée lorsque l'apprentissage est interrompu; et

un moyen pour altérer la structure de réseau en réponse à l'interprétation statique de la performance de l'unité cachée.

9. Appareil pour mettre en oeuvre une méthode d'apprentissage tel que revendiqué dans la revendication 8, incluant:

une pluralité de méthodes d'apprentissage (29); et

l'appareil comprend en outre un contrôleur d'apprentissage (30) comprenant:

un moyen pour mémoriser des caractéristiques des méthodes d'apprentissage;

un moyen pour amorcer l'apprentissage du réseau selon une méthode d'apprentissage sélectionnée;

un moyen pour contrôler dynamiquement une caractéristique d'apprentissage;

un moyen pour évaluer la caractéristique contrôlée selon une condition de contrôle; et

un moyen pour sélectionner une méthode d'apprentissage différente ou pour des étapes d'apprentissage subséquentes selon la condition de contrôle.

*Fig. 1*

$$\varphi(t) = 1 \,/\, 1 + \exp(-t)$$
( Or similar )

*Fig.2*

| Selection | Display |

Input
Space

20

Fig. 3 (a)

Macroscopic estimates
of error before and after
hidden unit removal

19

Contributory Estimates for
Hidden Units

Detailed
Information

Fig. 3 (b)

$x_1$ $w_1$ $\varphi$

$x_2$ $w_2$

$\beta$

8

Fig. 4

7

Input
Space

Unit most
Important
Here

21

Fig. 5

Fig. 6

Simulation Profiles

Fig. 7

Learning Manager

define control-condition
"control1"
moving average (mse)
> 0.0001

attach "control1"
to method A

use method A
use method B

Fig. 8